# EUROPÄISCHE PATENTSCHRIFT

(11) **EP 1 161 632 B1**
(45) Veröffentlichungstag und Bekanntmachung des Hinweises auf die Patenterteilung: **22.10.2003**
(21) Anmeldenummer: 00914105.2
(22) Anmeldetag: 03.03.2000
(51) Int. Cl.: F16D 3/04

(54) **KUPPLUNG ZUM VERBINDEN ZWEIER DREHBEWEGLICHER WELLENENDEN**
COUPLING FOR LINKING TWO ROTATABLE SHAFT ENDS
ACCOUPLEMENT DE DEUX EXTREMITES D'ARBRES MOBILES EN ROTATION

(30) Priorität: 06.03.1999 DE 19909931
(43) Veröffentlichungstag der Anmeldung: 12.12.2001
(73) Patentinhaber: LuK Automobiltechnik GmbH & Co. KG, 42499 Hückeswagen (DE)
(72) Erfinder: SCHULER, Friedrich, D-42499 Hückeswagen (DE)
(74) Vertreter: Gleiss, Alf-Olav, Dr.jur. Dipl.-Ing.
(86) Internationale Anmeldenummer: EP0001846
(87) Internationale Veröffentlichungsnummer: WO00053943

(56) Entgegenhaltungen:
- US-A- 5 421 780

## Beschreibung

Die Erfindung betrifft eine Kupplung zum Verbinden zweier drehbeweglicher Wellenenden zur Übertragung eines Drehmomentes, mit einem mit beiden Wellenenden formschlüssig verbundenen Kupplungselement.

Kupplungen der gattungsgemäßen Art sind bekannt. Sie sind üblicherweise als starre oder bewegliche Kupplungen ausgebildet. Bei den bekannten beweglichen Kupplungen ist zwar innerhalb bestimmter Toleranzbereiche ein Ausgleich von Lagerungsungenauigkeiten der zu verbindenden Wellenenden möglich, jedoch zeichnen sich diese durch einen relativ komplizierten Aufbau aus. So sind ineinandergreifende Kupplungsscheiben bekannt. Ferner sind Kreuzgelenkkupplungen (Kardangelenke) bekannt, bei denen zur Wellenlängsachse quer befestigte Bolzen um 90° zueinander versetzt in gabelförmigen Aussparungen gelagert sind und so einen Winkelversatz der Wellenenden gestatten.

Außerdem ist aus der US 5,421,780 eine Kupplungseinrichtung mit zwei drehbeweglichen Wellenenden bekannt, die zur Übertragung eines Drehmoments durch ein Kupplungselement miteinander verbunden sind. Das bekannte Kupplungselement ist sehr komplex ausgebildet und weist eine Vielzahl von Einzelteilen, wie Federn, auf.

Der Erfindung liegt die Aufgabe zugrunde, eine Kupplung der gattungsgemäßen Art zu schaffen, die einfach aufgebaut ist und die einen Achsversatz und einen Winkelversatz der zu verbindenden Wellenenden ausgleicht.

Erfindungsgemäß wird diese Aufgabe mittels einer Kupplung mit den in Anspruch 1 genannten Merkmalen gelöst. Dadurch, daß die Wellenenden senkrecht zu ihrer Drehachse verlaufende nutförmige Aufnahmen besitzen, in die Aufnahmen jeweils ein Kupplungsteil eines Kupplungselementes eingreift und die Kupplungsteile miteinander verbunden sind, wird vorteilhaft erreicht, daß ein Achsversatz und/oder ein Winkelversatz zwischen den zu verbindenden Wellenenden über das Kupplungselement in einfacher Weise ausgleichbar ist. Ein derartiges Kupplungselement besteht aus wenigen, im Minimalfall einem Bauelement und ist somit sehr kostengünstig in Massenproduktion herstellbar. Durch den einfachen Aufbau ist eine Kupplung zwischen den zwei Wellenenden darüber hinaus in einfacher Weise herstellbar, ohne daß es zusätzlicher Montagewerkzeuge bedarf. Durch die verschiebliche Lagerung wenigstens eines der Kupplungsteile des Kupplungselements in Richtung der Drehachsen der Wellenenden wird ermöglicht, über das Kupplungselement einen Achsversatz der zu verbindenden Wellenenden senkrecht zu deren Drehachsen in einfacher Weise auszugleichen. Durch diese Längsverschieblichkeit der Kupplungsteile in ihren Aufnahmen der Wellenenden wird ohne Beeinträchtigung der Verbindung zwischen den Wellenenden und der Drehbeweglichkeit zum Ausgleich eines Winkelversatzes zusätzlich der Ausgleich des Achsversatzes möglich.

In bevorzugter Ausgestaltung der Erfindung ist vorgesehen, daß die beiden Kupplungsteile des Kupplungselementes im wesentlichen parallel zueinander angeordnet sind. Hierdurch läßt sich eine besonders gute fluchtende Verbindung der zwei Wellenenden erreichen. Ferner lassen sich die parallel zueinander angeordneten Kupplungsteile in einfacher Weise formschlüssig miteinander verbinden. Insbesondere ist bevorzugt, wenn das Kupplungselement einstückig ausgebildet ist und ein die Kupplungsteile verbindendes Mittelstück aufweist. Hierdurch kann beispielsweise die Herstellung derartiger Kupplungselemente als Stangenware erfolgen, wobei durch einfaches Ablängen die jeweiligen Kupplungselemente erhältlich sind. Entsprechend den Anforderungen an das zu übertragende Drehmoment können die Kupplungselemente beispielsweise aus Metall, insbesondere vergütetem Stahl, oder aber auch aus Kunststoff bestehen.

Ferner ist in bevorzugter Ausgestaltung der Erfindung vorgesehen, daß wenigstens eines der Kupplungsteile des Kupplungselementes um ihre Längsachse schwenkbeziehungsweise drehbeweglich gelagert ist. Hierdurch wird vorteilhaft erreicht, daß in einfacher Weise ein Winkelversatz zwischen den Wellenenden ausgleichbar ist, indem nämlich wenigstens eines der Wellenenden um eine Längsachse des Kupplungselementes verdrehbar ist.

Ferner ist in bevorzugter Ausgestaltung der Erfindung vorgesehen, daß dem Kupplungselement, insbesondere wenigstens einem der Kupplungsteile des Kupplungselementes, eine Verliersicherung zugeordnet ist. Hierdurch wird erreicht, daß beim bestimmungsgemäßen Einsatz der Kupplung auch bei relativ hohen mechanischen Beanspruchungen eine exakte Positionierung des Kupplungselementes gewährleistet bleibt. Eine bevorzugte Ausführung der Verliersicherung kann beispielsweise ein Splint, Sprengring, Festlegstift oder dergleichen sein.

Eine bevorzugte Anwendung der erfindungsgemäßen Kupplung ist bei der Kupplung eines Rotors einer Druckmittel-Fördereinrichtung, insbesondere einer Vakuumpumpe, mit einer Abtriebswelle einer Antriebsmaschine möglich. Durch das einfache und kleinbauende Kupplungselement lassen sich so sehr kompakte Antriebskupplungen für Druckmittel-Fördereinrichtungen verwirklichen, deren axiale Erstreckung in Richtung der zu verbindenden Wellenenden auf ein Minimum beschränkt ist. Hierdurch verringert sich der Einbauraum der gesamten angetriebenen Druckmittel-Fördereinrichtung erheblich.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figuren 1 bis 4: eine Kupplung in einer ersten Ausführungsvariante;
- Figuren 5 und 6: eine Kupplung in einer zweiten Ausführungsvariante;
- Figuren 7 bis 10: eine Kupplung in einer dritten Ausführungsvariante;
- Figuren 11 bis 15: eine Kupplung in einer vierten Ausführungsvariante und
- Figuren 16 bis 49: verschiedene Ausführungsvarianten einer Verliersicherung für eine Kupplung.

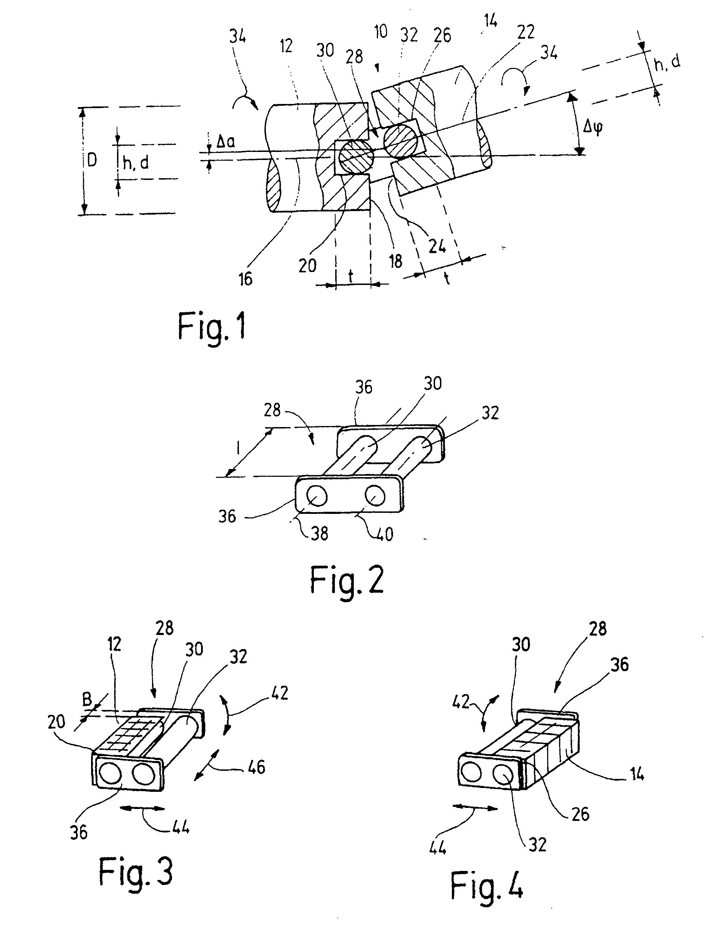

In Figur 1 ist schematisch ein Längsschnitt durch eine Kupplung 10 gezeigt, mittels derer ein erstes Wellenende 12 mit einem zweiten Wellenende 14 zur Übertragung eines Drehmomentes gekuppelt ist. Das Wellenende 12 ist beispielsweise die Abtriebswelle einer Antriebsmaschine, während das Wellenende 14 beispielsweise die Antriebswelle eines Rotors einer Druckmittel-Fördereinrichtung, beispielsweise eines Rotors einer Vakuumpumpe eines Kraftfahrzeugs, ist. Selbstverständlich sind andere Anwendungsgebiete möglich.

Das Wellenende 12 besitzt eine senkrecht zu einer Drehachse 16 verlaufende, in die Stirnfläche 18 eingebrachte nutförmige Aufnahme 20. Das Wellenende 14 besitzt ebenfalls eine zu seiner Drehachse 22 senkrecht verlaufende, in die Stirnfläche 24 eingebrachte nutförmige Aufnahme 26.

Die Wellenenden 12 und 14 sind über ein Kupplungselement 28 formschlüssig miteinander verbunden. Das Kupplungselement 28 besitzt zwei -auch als Knebel, Bolzen oder Rundstift bezeichnete- Achsen, nämlich eine erste Achse 30 sowie eine zweite Achse 32. Die Achsen 30 und 32 sind -wie anhand der nachfolgenden Figuren noch erläutert wird- formschlüssig miteinander verbunden. Die Achse 30 greift in die nutförmige Aufnahme 20 des Wellenendes 12 und die Achse 32 in die nutförmige Aufnahme 26 des Wellenendes 14 ein. Die nutförmigen Aufnahmen 20 und 26 sind im Querschnitt betrachtet rechteckig ausgebildet, wobei ihre Höhe h dem Durchmesser d der Achsen 30 beziehungsweise 32 entspricht. Die Tiefe t der Aufnahmen 20 und 26 ist größer als der Durchmesser d. Durch eine derartige Wahl der Größenverhältnisse wird erreicht, daß die Achsen 30 und 32 in axialer Richtung der Drehachsen 16 beziehungsweise 22 verschieblich gelagert sind. Ferner ist die Achse 30 gegenüber dem Wellenende 12 und die Achse 32 gegenüber dem Wellenende 14 schwenk- beziehungsweise drehbeweglich. In die Papierebene hineinbetrachtet, das heißt senkrecht zur Bildebene von Figur 1, sind die Achsen 30 beziehungsweise 32 in noch nachfolgend erläuterter Weise ebenfalls verschieblich gelagert.

Durch eine derartige Ausgestaltung des Kupplungselementes 28 wird erreicht, daß eine Kupplung der Wellenenden 12 und 14 trotz eines angedeuteten Versatzes Δa beziehungsweise Winkelversatzes Δϕ der Drehachsen 16 beziehungsweise 22 in einfacher Weise möglich ist. Wird das Wellenende 12, wie durch einen Pfeil 34 angedeutet, im Uhrzeigersinn drehangetrieben, so wird das Drehmoment über das Kupplungselement 28 auf das Wellenende 14 übertragen, so daß dieses ebenfalls in der durch den Pfeil 34 angedeuteten Drehrichtung angetrieben ist.

Figur 2 zeigt in einer Perspektivdarstellung das Kupplungselement 28. Dieses weist die Achsen 30 und 32 auf, die über zwei stirnseitige Verbindungselemente 36 formschlüssig miteinander verbunden sind. Die Längsachsen 38 beziehungsweise 40 der Achsen 30 und 32 verlaufen im wesentlichen parallel zueinander. Denkbar ist auch ein Kupplungselement 28 mit nur einem Verbindungselement 36. Dadurch kann das Kupplungselement 28 radial in die Aufnahmen 20 beziehungsweise 26 eingeschoben werden.

Figur 3 zeigt das Kupplungselement 28 in Wirkverbindung mit der Aufnahme 20 des Wellenendes 12. Durch die in Figur 1 erläuterten Verhältnisse der Höhe h, des Durchmessers d und der Tiefe t wird erreicht, daß das Kupplungselement 28 relativ zum Wellenende 12 entsprechend dem Doppelpfeil 42 schwenk- beziehungsweise drehbeweglich ist und entsprechend dem Doppelpfeil 44 zur Drehachse 16 längsverschieblich ist. Wird zusätzlich eine Länge 1 der Achse 30 (Figur 2) so gewählt, daß diese größer ist als ein Durchmesser D des Wellenendes 12 (Figur 1), ergibt sich, daß die Achse 30 um einen Betrag B hinausragt, der der Differenz zwischen der Länge 1 und dem Durchmesser D entspricht. Hierdurch wird erreicht, daß das Kupplungselement 28 entsprechend dem Doppelpfeil 46 auch radial zur Drehachse 16 des Wellenendes 12 verschieblich gelagert ist.

Anhand der Darstellung in Figur 3 wird deutlich, daß das Kupplungselement 28 bezüglich des Wellenendes 12 in zwei translatorischen Freiheitsgraden entsprechend den Doppelpfeilen 44 und 46 sowie drehbeweglich entsprechend dem Doppelpfeil 42 gelagert ist. Durch eine derartige Ausgestaltung lassen sich die Versätze Δa und die Winkelversätze Δϕ gemäß Figur 1 in einfacher Weise ausgleichen.

Die Verbindungselemente 36 können starr ausgebildet sein. Nach einem weiteren Ausführungsbeispiel kann aber auch vorgesehen sein, daß die Verbindungselemente 36 eine definierte Elastizität besitzen. Hierdurch wird die Kupplung 10 mit einer Drehelastizität ausgestattet, mit der in Drehrichtung 34 wirkende Schwingungen ausgeglichen werden können.

In Figur 4 ist beispielhaft eine Verbindung zwischen dem Kupplungselement 28 und dem Wellenende 14 gezeigt. Gleiche Teile wie in den vorhergehenden Figuren sind mit gleichen Bezugszeichen versehen und nicht nochmals erläutert. Hier ist vorgesehen, daß die Länge 1 der Achse 32 dem Durchmesser D des Welienendes 14 entspricht. Entsprechend ist deren Differenz gleich Null, so daß der Betrag B (Figur 3) entfällt. Hierdurch ist das Kupplungselement 28 mit dem Wellenende 14 schwenk- beziehungsweise drehbeweglich -entsprechend dem Doppelpfeil 42- und mit dem einen translatorischen Freiheitsgrad -entsprechend dem Doppelpfeil 44- gekoppelt.

In konkreten Ausführungsbeispielen kann vorgesehen sein, daß beide Wellenenden 12 und 14 entsprechend der Drehbewegung 42 und der translatorischen Freiheitsgrade 44 und 46 mit dem Kupplungselement 28 gekoppelt sind. Es kann jedoch auch vorgesehen sein, daß die Bewegung der Kupplung lediglich in einem translatorischen Freiheitsgrad 44 gemäß Figur 4 erfolgt. Das hat den Vorteil, daß die Kupplung zu den Wellenenden immer zentriert läuft und keine großen Unwuchten erzeugen kann. Ferner sind Mischanordnungen möglich, das heißt, das Wellenende 12 oder 14 ist beispielsweise gemäß Figur 3 und das jeweils andere Wellenende gemäß Figur 4 mit dem Kupplungselement 28 verbunden.

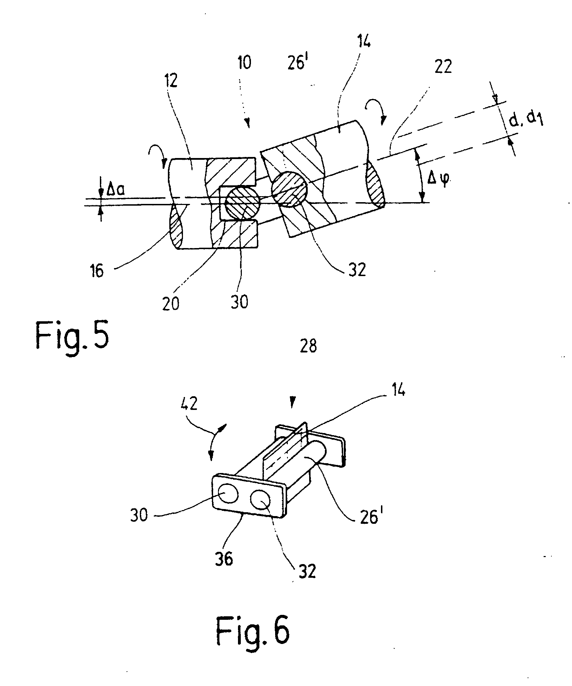

In Figur 5 ist die Kupplung 10 in einer zweiten Ausführungsvariante gezeigt. Der prinzipielle Aufbau und die Funktion entsprechen der in den Figuren 1 bis 4 erläuterten Funktionsweise, so daß nur auf die Unterschiede eingegangen wird. Gleiche Teile sind jeweils immer mit gleichen Bezugszeichen versehen.

Bei dem hier gezeigten Ausführungsbeispiel ist die nutförmige Aufnahme 26' in dem Wellenende 14 -im Querschnitt betrachtet- nicht rechteckig, sondern rund ausgebildet. Hierbei entspricht der Durchmesser d der Achse 32 dem Durchmesser d₁ der Aufnahme 26. Die Achse 32 wird somit formschlüssig von dem Wellenende 14 umgriffen.

Hierdurch ergibt sich, wie in Figur 6 verdeutlicht ist, daß das Kupplungselement 28 lediglich in Schwenk- beziehungsweise Drehrichtung 42 relativ zu dem Wellenende 14 verschwenk- beziehungsweise verdrehbar ist. Die Durchmesser d und d₁ der Achse 32 beziehungsweise der Aufnahme 26' sind so aufeinander abgestimmt, daß die Achse 32 im wesentlichen spielfrei (spielarm) in der Aufnahme 26' eingreift. Hierdurch wird die Drehbewegung 42 gewährleistet. Die weitere translatorische Bewegung 44, wie sie in Figur 4 angesprochen wurde, ist durch das formschlüssige Umgreifen der Achse 32 nicht möglich. Wie bereits in Figur 3 erläutert, kann zusätzlich vorgesehen sein, daß eine translatorische Bewegung 46 zusätzlich durch Wahl der Länge 1 beziehungsweise des Durchmessers D möglich wird.

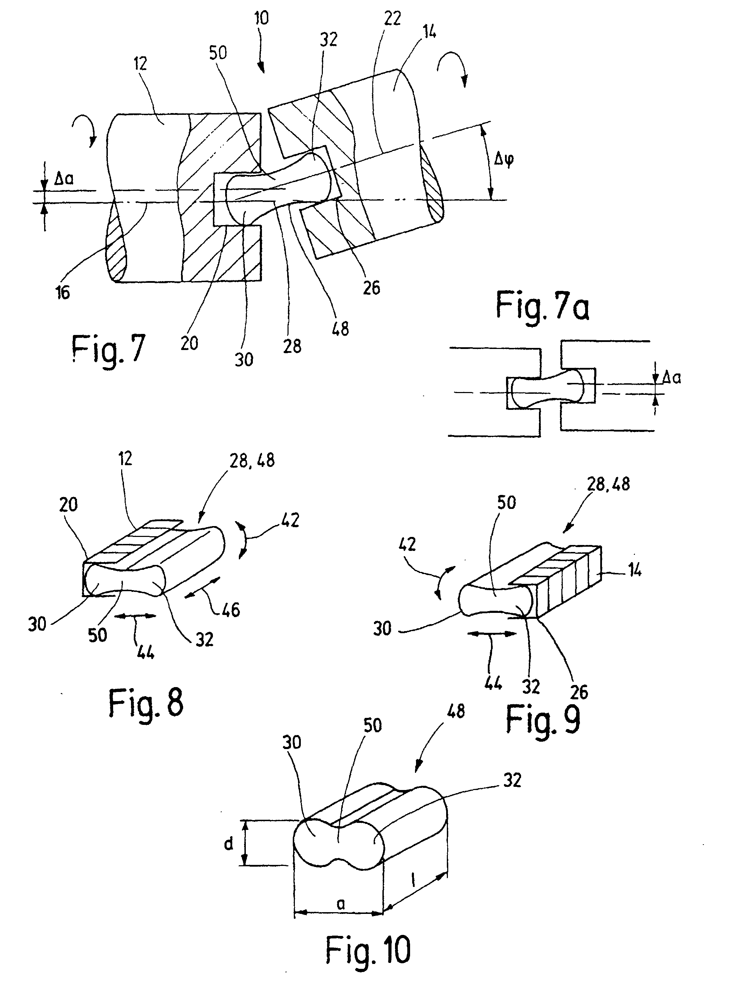

Figur 7 zeigt schließlich eine Kupplung 10 in einem dritten Ausführungsbeispiel, wobei lediglich wiederum nur auf die Unterschiede zu den vorhergehenden Figuren eingegangen wird. Hier ist das Kupplungselement 28 als einteiliger Formkörper 48 ausgebildet. Bei dem Formkörper gehen die Achsen 30 und 32 über ein mittiges Verbindungsstück 50 ineinander über. Zur Ausbildung der Achsen 30 und 32 ist das Verbindungsstück 50 nach innen gewölbt (tailliert) ausgebildet. Hierdurch wird der Ausgleich des Winkelversatzes Δϕ und/oder des in den Figuren dargestellten Höhenversatzes Δa, auch bei einem einstückigen Kupplungselement 28 möglich.

Auch mit diesem Kupplungselement 28 wird -wie anhand der Figuren 8 und 9 verdeutlicht ist- eine relative Schwenk- beziehungsweise Drehbewegung 42 zwischen den Wellenenden 12 beziehungsweise 14 und dem Kupplungselement 28 sowie eine translatorische Bewegung 44 beziehungsweise eine vorzugsweise durch hier nicht dargestellte Anschläge translatorische Bewegung 46 möglich. Dies wird durch entsprechende Gestaltung der Größenverhältnisse der Länge l (Figur 10), des Durchmessers d beziehungsweise der Tiefe t und der Höhe h -wie in den Figuren 1 bis 4 ausführlich erläutertmöglich.

Figur 10 zeigt in einer Perspektivansicht ein Formteil 48. Anhand von Figur 10 sollen optimale Größenverhältnisse des Formteiles 48 verdeutlicht werden, die prinzipiell auf das Kupplungselement 28 übertragbar sind. Dargestellt ist der Durchmesser d der Achsen 30 beziehungsweise 32 sowie die Länge l. Ferner ist ein Abstand a angegeben, der die axiale Erstreckung des Formkörpers 48 etwa in Richtung der Drehachsen 16 beziehungsweise 22 bestimmt. Der Abstand a beträgt vorzugsweise 130 bis 400 % des Durchmessers d, während die Länge l vorzugsweise 200 bis 1000 % des Durchmessers d beträgt.

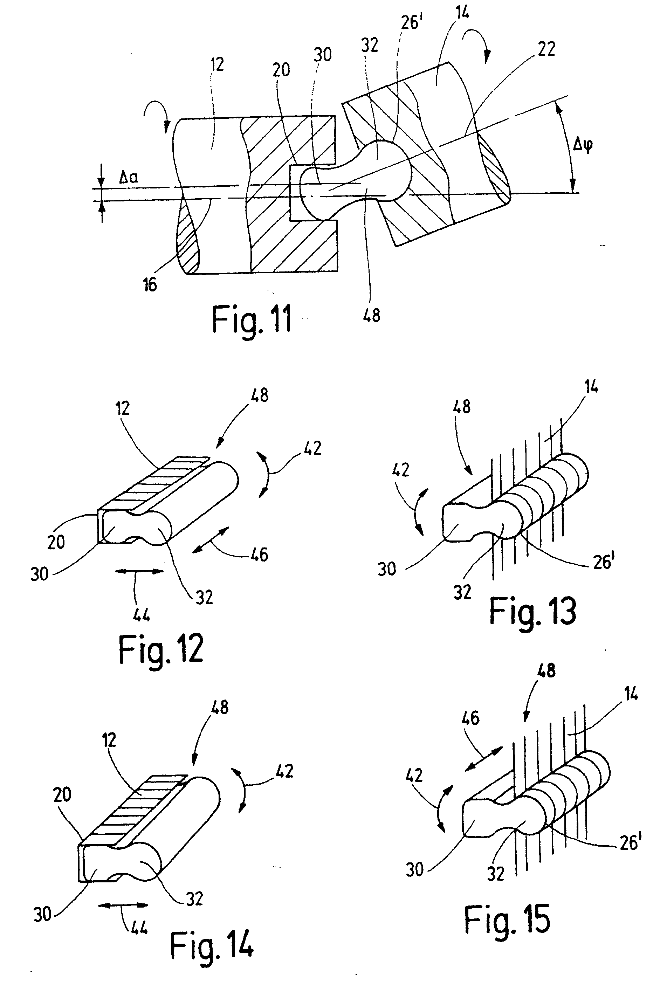

Wie anhand von Figur 11 deutlich wird, kann das Formteil 48 analog den zu den Figuren 5 und 6 erläuterten Ausgestaltungen des Kupplungselementes 28 ausgebildet sein. Auch hier ist die Aufnahme 26' der Achse 32 derart angepaßt, daß diese formschlüssig durch das Wellenende 14 umgriffen wird. Hierdurch ergibt sich die in Figur 13 verdeutlichte Schwenk- beziehungsweise Drehbeweglichkeit 42 des Formteiles 48 zum Wellenende 14, während eine translatorische Bewegung 44 nicht möglich ist.

Die Darstellung in Figur 12 entspricht der Darstellung in Figur 3, wobei das Kupplungselement 28 von dem Formteil 48 gebildet ist.

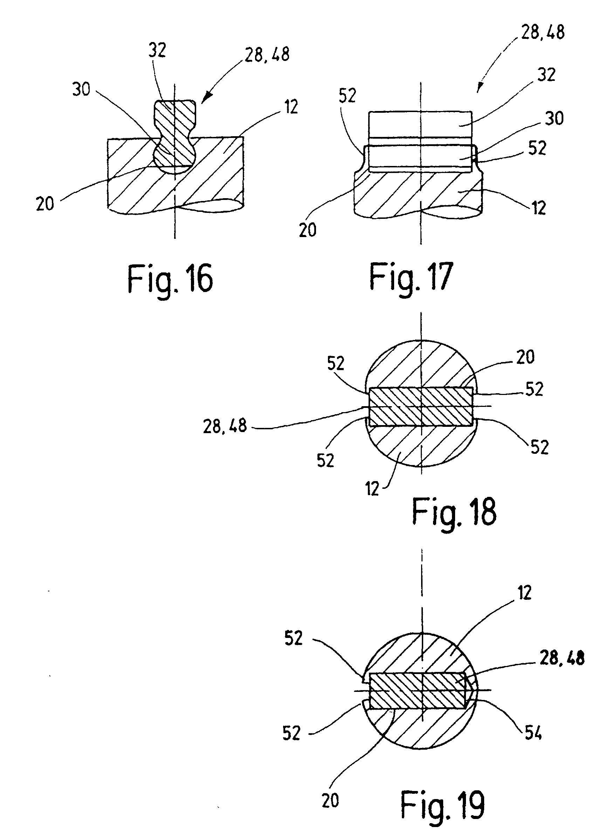

Entsprechend der Darstellung in Figur 14 kann die relative Beweglichkeit des Formteiles 48 in Bezug auf das Wellenende 12 ebenfalls auf die Drehbewegung 42 und die translatorische Bewegung 44 beschränkt sein. Dies wird erreicht, indem die Länge l des Formteiles 48 dem Durchmesser D des Wellenendes 12 entspricht, wobei die translatorische Beweglichkeit 46 beziehungsweise die radiale Beweglichkeit des Formteiles 48 gegenüber dem Wellenende 12 durch unterschiedliche, anhand der Figuren 16 bis 49 noch erläuterte Möglichkeiten begrenzt sein kann.

Schließlich verdeutlicht Figur 15, daß vorgesehen sein kann, die relative Beweglichkeit des Formteiles 48 in Bezug auf das Wellenende 14 auf die Drehbewegung 42 und die translatorische Bewegung 46 auszulegen. Dies wird erreicht, indem beispielsweise der Durchmesser D des Wellenendes 14 größer gewählt ist als die Länge l des Formteiles 48, so daß sich in radialer Richtung zur Drehachse 22 ein Spiel ergibt, das die translatorische Bewegung 46 innerhalb bestimmter Anschlagmittel, die unten anhand der Figuren 16 bis 49 beschrieben werden, ermöglicht.

Nach weiteren Ausführungsbeispielen kann wiederum vorgesehen sein, daß die Wellenenden 12 und 14 auf unterschiedliche Art, das heißt mit unterschiedlichen translatorischen und rotatorischen Freiheitsgraden, mit dem Formteil 48 gekuppelt sind.

Anhand der Figuren 16 bis 49 werden unterschiedliche Varianten einer auch als Anschlag für das Kupplungselement 28 dienenden Verliersicherung für das Kupplungselement 28 erläutert. Die Darstellungen beziehen sich auf die einteilige Ausführung des Kupplungselementes 28 als Formkörper 48. Bei den in den Figuren 1 bis 6 gezeigten Ausführungsvarianten des Kupplungselementes 28 kann eine Verliersicherung durch die Verbindungselemente 36 erfolgen, die die Wellenenden 12 beziehungsweise 14 im Bereich von deren nutförmigen Aufnahmen 20 und 26 zwischen sich aufnehmen. Hierdurch wird ein radiales Herausziehen beziehungsweise Herausfallen des Kupplungselementes 28 unmöglich.

Bei den Darstellungen in den Figuren 16 bis 49 ist das Kupplungselement 28 jeweils nur mit einem Wellenende 12 gezeigt. Selbstverständlich können die erläuterten Ausführungsvarianten der Verliersicherung zusätzlich oder auch ausschließlich auf den Seiten des Wellenendes 14 erfolgen.

In den Figuren 16, 17 und 18 ist eine erste Ausführungsvariante einer Verliersicherung dargestellt. Die Figur 16 zeigt eine Seitenansicht, Figur 17 einen Längsschnitt und Figur 18 eine Draufsicht auf das mit dem Wellenende 12 gekuppelte Kupplungselement 28. Hierbei erfolgt eine Verliersicherung derart, daß die nutförmige Aufnahme 20, die die Achse 30 aufnimmt, an ihren seitlichen Mündungen verstemmt ist. Hierdurch kommt es zur Ausbildung von Laschen 52, die aus verdrängtem Material des Wellenendes 12 bestehen. Diese Laschen 52 bilden radiale Anschläge für das Kupplungselement 28, so daß dieses nicht radial aus dem Wellenende 12 austreten kann.

Gemäß Figur 19 kann vorgesehen sein, daß die nutförmige Aufnahme 20, vor allem bei runden Aufnahmen (Figuren 5 und 11, 26') in radialer Richtung sackförmig ausgebildet ist, so daß ein Grund 54 der Aufnahme 20 einen Bewegungsanschlag für das Kupplungselement 28 bildet. An der dem Grund 54 gegenüberliegenden Seite der Aufnahme 20 kann wiederum ein Verstemmen und Ausbildung der Laschen 52 vorgesehen sein.

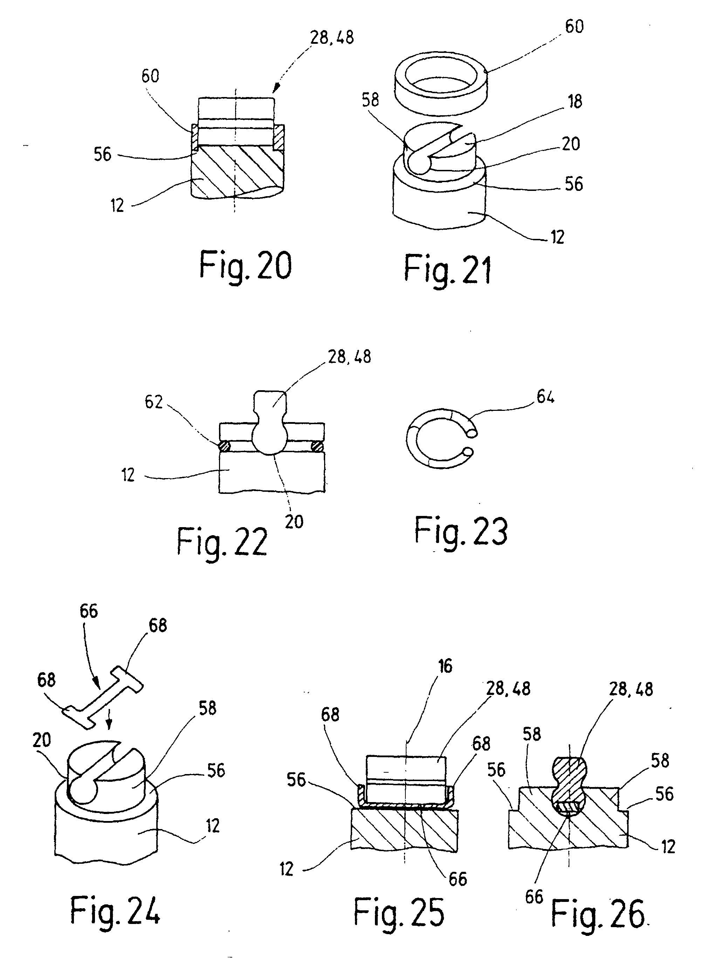

Bei dem in den Figuren 20 und 21 gezeigten Ausführungsbeispiel ist vorgesehen, daß das Wellenende 12 unter Ausbildung einer Ringstufe 56 in einen Zapfen 58 übergeht. Dieser Zapfen 58 weist die nutförmige Aufnahme 20 auf. Zur Verliersicherung des Kupplungselementes 28 wird ein Ringelement 60 über den Zapfen 58 geschoben, so daß das Ringelement 60 das Kupplungselement 28 in seiner radialen Beweglichkeit zum Wellenende 12 begrenzt.

Gemäß der in den Figuren 22 und 23 gezeigten Ausführungsvariante ist über den Umfang des Wellenendes 12 eine Ringnut 62 eingebracht, die im Bereich der Aufnahme 20 liegt. In diese Ringnut 62 ist ein Sicherungsring 64, der vorzugsweise als Federring ausgebildet ist, einbringbar.

Eine weitere Ausführungsvariante zeigen die Figuren 24 bis 26. Das Wellenende 12 weist wiederum den über die Ringstufe 56 übergehenden Zapfen 58 auf. In die Aufnahme 20 ist ein -in Draufsicht gesehen- Doppel-Tförmiges Sicherungsblech 66 einbringbar. Dieses Sicherungsblech 66 wird vor Einbringen des Kupplungselementes 28 in die Aufnahme 20 eingelegt. Anschließend werden die Enden 68 umgebogen, so daß diese sich parallel zur Drehachse 16 erstrecken. Hierdurch wird das Kupplungselement 28 quasi zwischen den Enden 68 eingespannt, so daß die radiale Beweglichkeit des Kupplungselementes 28 eingeschränkt ist. Die Enden 68 besitzen eine Dimensionierung, die ausreicht, daß die Mündungen der nutförmigen Aufnahmen 20 übergriffen werden.

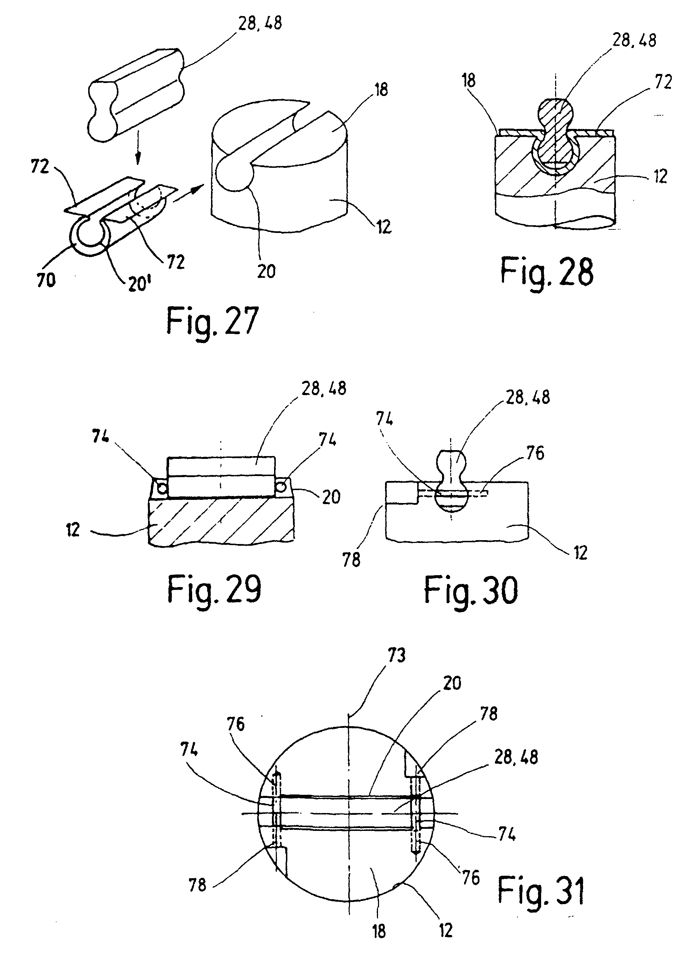

Gemäß der in den Figuren 27 und 28 gezeigten Ausführungsvariante wird in die Aufnahme 20 ein Paßstück 70 eingebracht. Hierbei ist die Aufnahme 20 des Wellenendes 12 um eine Wandstärke des Paßstückes 70 größer ausgebildet, so daß das Paßstück 70 die eigentliche Aufnahme 20' ausbildet. Das Paßstück 70 besitzt parallel zur Stirnfläche 18 sich erstreckende Laschen 72, die mit der Stirnfläche 18 verbindbar sind. Dies kann beispielsweise durch Punktschweißen, Kleben oder andere geeignete Maßnahmen erfolgen. Mittels des Paßstückes 70 kann gleichzeitig ein Toleranzausgleich zwischen dem Kupplungselement 28 und der Aufnahme 20 des Wellenendes 12 erfolgen. Darüber hinaus kann das Paßstück 70 die Lagereigenschaften für die Drehbeweglichkeit des Kupplungselementes 28 übernehmen, so daß das Wellenende 12, insbesondere die Aufnahme 20, gegebenenfalls nicht nachzubearbeiten, zum Beispiel zu härten, ist.

Gemäß der in den Figuren 29 bis 31 gezeigten Ausführungsvariante wird die Verliersicherung des Kupplungselementes 28 mittels parallel zu einer Durchmesserlinie 73 zum Wellenende 12 eingebrachter Sicherungsstifte 74 realisiert. Diese Sicherungsstifte 74 werden in Bohrungen 76 des Wellenendes 12 eingebracht, beispielsweise mittels Preßpassung. Um ein Überstehen der Sicherungsstifte 74 über den Umfang des Wellenendes 12 zu verhindern, sind taschenförmige Ausnehmungen 78 vorgesehen, in denen die Sicherungsstifte 74 versenkt angeordnet werden können. Die Sicherungsstifte 74 kreuzen hierbei quasi die Aufnahme 20, so daß das Kupplungselement 28 zwischen die im wesentlichen parallel zueinander verlaufenden Sicherungsstifte 74 angeordnet ist.

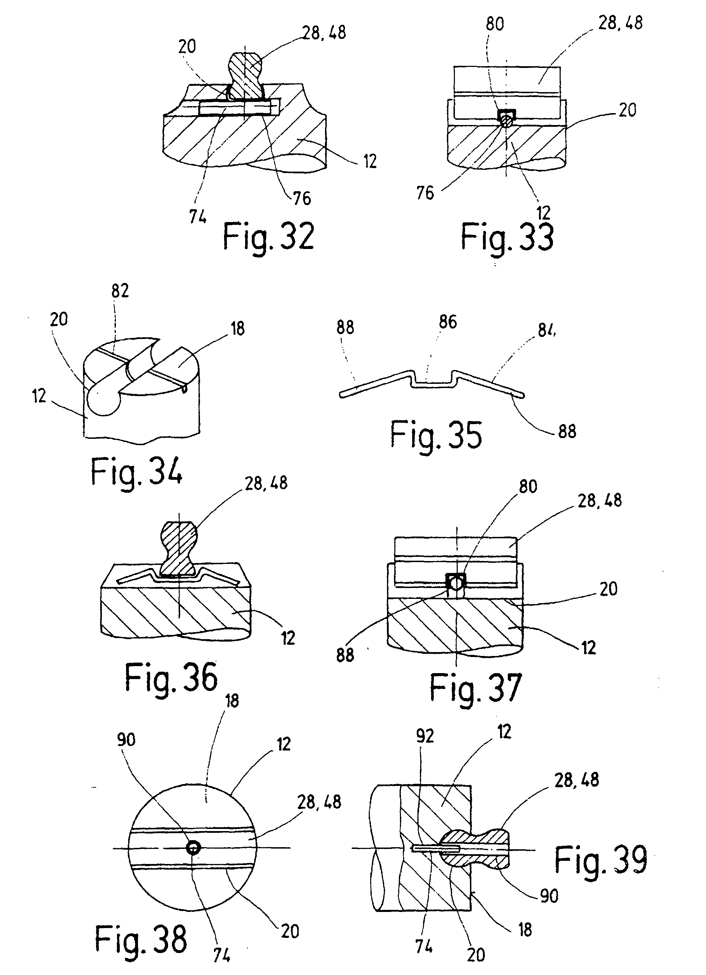

Gemäß dem in den Figuren 32 und 33 gezeigten Ausführungsbeispiel ist vorgesehen, daß lediglich ein Sicherungsstift 74 angeordnet wird, der radial zum Wellenende 12 in eine entsprechende Bohrung 76 eingebracht wird, wobei die Bohrung den Grund der Aufnahme 20 schneidet. Das Kupplungselement 28 besitzt eine mit der Bohrung 76 korrespondierende Nut 80, so daß der Sicherungsstift 74 in die Nut 80 eingreift. Die Tiefe der Nut 80 ist so auf die Anordnung, die Kontur und den Durchmesser des Sicherungsstiftes 74 abgestimmt, daß die erforderliche Dreh- beziehungsweise Schwenkbewegung des Kupplungselementes 28 gewährleistet ist. Da der Sicherungsstift 74 in dem Wellenende 12 festgelegt ist, wird somit ebenfalls vermieden, daß das Kupplungselement 28 radial zum Wellenende 12 verschieblich ist.

Anstelle des Sicherungsstiftes 74 kann gemäß dem in den Figuren 34 bis 37 gezeigten Ausführungsbeispiel vorgesehen sein, daß das Wellenende 12 einen axial verlaufenden Schlitz 82 aufweist, der so tief ausgebildet ist, daß der Schlitz 82 den Grund der Aufnahme 20 schneidet. In diesen Schlitz 82 ist ein Sicherungsdraht 84 einbringbar, der eine der Aufnahme 20 angepaßte Ausformung 86 besitzt. Die Schenkel 88 des Drahtes 84 liegen in dem Schlitz 82 in dem Bereich des Wellenendes 12. Das Kupplungselement 28 besitzt wiederum die Nut 80, die mit dem Schlitz 82 korrespondiert. Hierdurch wird erreicht, daß der Draht 84 einerseits im Schlitz 82 und andererseits in der Nut 80 eingreift. Ein radiales Verschieben des Kupplungselementes 28 ist hierdurch auch vermieden.

Eine weitere Variante zeigen die Figuren 38 und 39. Hier ist vorgesehen, daß das Kupplungselement 28 eine axial zum Wellenende 12 verlaufende Bohrung 90 besitzt, die mit einer axialen Bohrung 92 des Wellenendes 12 korrespondiert. Durch die Bohrungen 90 und 92 ist ein Sicherungsstift 74 einbringbar. Der Sicherungsstift 74 ist derart angeordnet, daß dieser teilweise in die Bohrung 92 und teilweise in die Bohrung 90 eingreift. Hierdurch ist wiederum die radiale Verschieblichkeit des Kupplungselementes 28 verhindert. Dabei muß durch genügend Spiel gewährleistet werden, daß die Dreh- beziehungsweise Schwenkbewegung des Kupplungselementes 28 gegenüber dem Sicherungsstift 74 möglich ist.

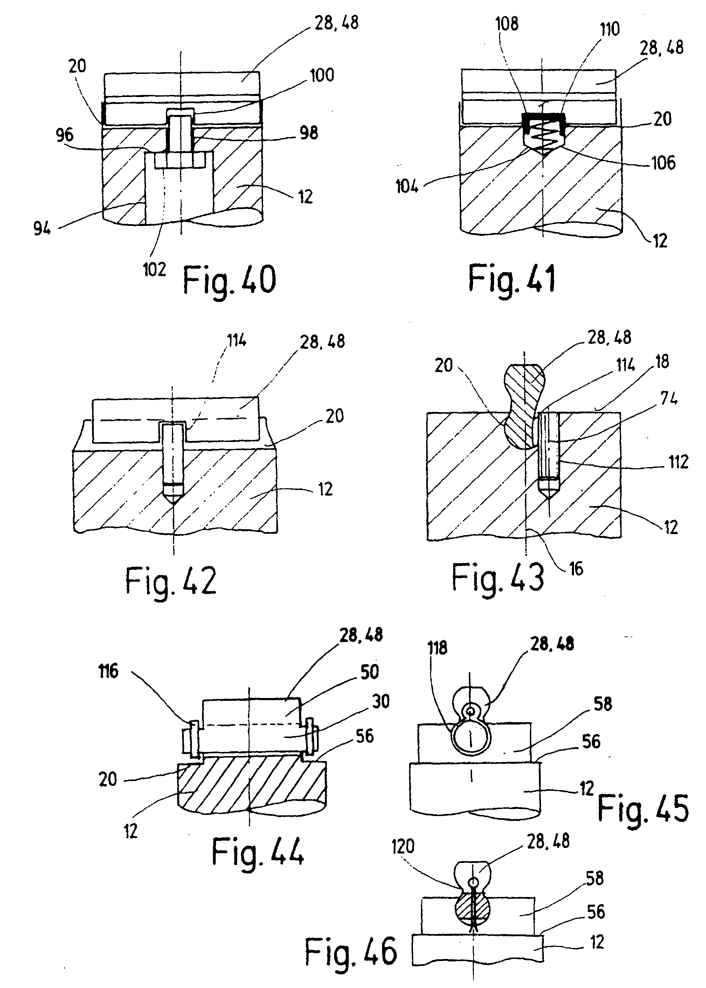

Gemäß dem in Figur 40 gezeigten Ausführungsbeispiel ist vorgesehen, daß das Wellenende 12 eine axiale Durchgangsöffnung 94 besitzt, die sich von dem, dem Kupplungselement 28 abgewandten Ende des Wellenendes 12 erstreckt. Die Durchgangsöffnung 94 geht über eine Ringstufe 96 in eine durchmesserkleinere Öffnung 98 über. Die Öffnung 98 mündet in der Aufnahme 20. Das Kupplungselement 28 besitzt eine ebenfalls radial zum Wellenende 12 verlaufende Bohrung 100, die mit der Öffnung 98 korrespondiert. Zur Fixierung des Kupplungselementes 28 ist nunmehr vorgesehen, daß durch die Öffnung 94 eine Sicherungsschraube 102 eingebracht wird, deren Gewindeschaft in die Welle 12 einschraubbar ist, und deren Kopf sich an der Ringstufe 96 abstützt. Der Innendurchmesser der Bohrung 100 muß gegenüber dem Außendurchmesser der Sicherungsschraube 102 so gewählt werden, daß die Schwenkbewegung des Kupplungselementes 28 möglich ist.

Figur 41 zeigt eine Ausführungsvariante, bei der das Wellenende 12 eine sich vom Grund der Aufnahme 20 axial erstreckende Bohrung 104 aufweist. Die Bohrung 104 nimmt ein Federelement 106 auf, das sich einerseits am Grund der Bohrung 104 und andererseits an einem topfförmigen Halteteil 108 abstützt. Das topfförmige Halteteil 108 greift in eine korrespondierende Sacköffnung 110 des Kupplungselementes 28 ein. Bei montiertem Kupplungselement 28 wird das Halteelement 108 durch die Kraft des Federelementes 106 in die Sacköffnung 110 gedrängt, so daß ein radiales Verschieben des Kupplungselementes 28 zum Wellenende 12 nicht möglich ist.

Gemäß dem in den Figuren 42 und 43 gezeigten Ausführungsbeispiel ist vorgesehen, daß eine Sackbohrung 112 sich von der Stirnfläche 18 des Wellenendes 12 exzentrisch zur Drehachse 16 erstreckt. Die Bohrung 112 ist so angelegt, daß diese die Aufnahme 20 schneidet. Das Kupplungselement 28 besitzt eine randoffene Nut 114, die mit der Sacköffnung 112 korrespondiert. In die Sacköffnung 112 ist ein Sicherungsstift 74 einbringbar. Dieser wird so eingebracht, daß dieser plan mit der Stirnfläche 18 abschließt. Der Sicherungsstift 74 greift einerseits in die Sacköffnung 112 und andererseits in die Nut 114 des Kupplungselementes 28 ein. Auch hierdurch wird eine radiale Verschieblichkeit des Kupplungselementes 28 verhindert. Die Dreh- beziehungsweise Schwenkbarkeit des Kupplungselementes 28 muß hier -wie bei allen anderen Ausführungsbeispielen- durch hinreichendes Spiel gewährleistet sein.

Ein weiteres Ausführungsbeispiel ist in den Figuren 44 und 45 dargestellt. Hier ist das Kupplungselement 28 so ausgebildet, daß das zwischen den Achsen 30 und 32 vorhandene Verbindungsstück 50 eine geringere Länge l (Figur 10) aufweist als die Achse 30 beziehungsweise 32. Die Achse 30 steht somit radial über das Mittelstück 50 beidseitig über. Das Wellenende 12 besitzt den durch die Ringstufe 56 ausgebildeten Zapfen 58. An den überstehenden Enden der Achse 30 ist nunmehr ein Sicherungselement 116 aufbringbar, das beispielsweise als Sprengring 118 (Figur 45) oder als Splint 120 (Figur 46) ausgebildet ist. Der Splint 120 wird durch eine entsprechende Bohrung des überstehenden Bereiches der Achse 30 hindurchgesteckt. Der Sprengring 118 greift in eine entsprechende Umfangsnut dieses Überstandes der Achse 30 ein. In beiden Fällen wird erreicht, daß die radiale Verschieblichkeit des Kupplungselementes 28 verhindert ist.

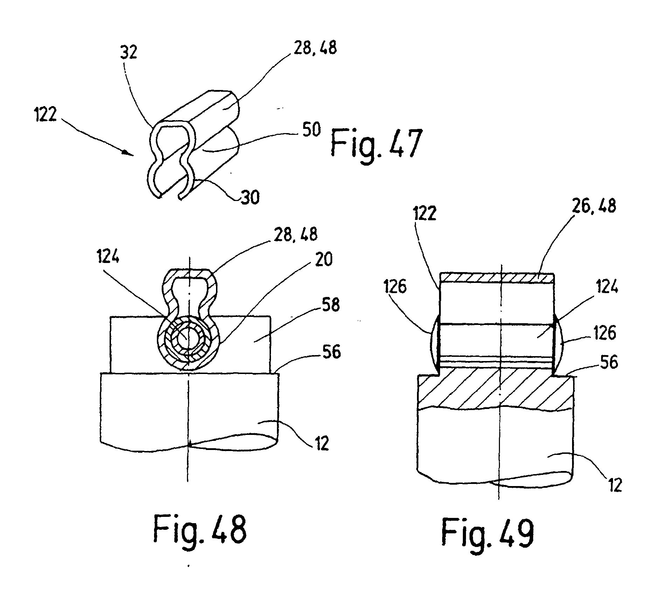

Schließlich ist in den Figuren 47 bis 49 eine weiteren Ausführungsvariante gezeigt. Hier ist vorgesehen, daß das Kupplungselement 28 als Hohlkörper 122 ausgebildet ist, dessen Außenkontur die Achsen 30 beziehungsweise 32 und das Mittelstück 50 ausbilden. Dieser Hohlkörper 122 kann entweder geschlossen oder in Längsrichtung der Achse 30 oder 32 offen sein. Nach Eingreifen des Hohlkörpers 122 in die Aufnahme 20 des Wellenendes 12 wird eine Welle 124 in Längserstreckung der Achse 30 durch den Hohlkörper 122 geschoben und an den über den Hohlkörper 122 überstehenden Enden mit Sicherungselementen 126 versehen. Je nach Ausführung der Welle 124 können die. Sicherungselemente 126 beispielsweise Nietköpfe, Muttern, Sprengringe, Splinte oder dergleichen sein.

## Patentansprüche

1. Kupplungseinrichtung mit zwei drehbeweglichen Wellenenden (12,14), die zur Übertragung eines Drehmoments durch ein Kupplungselement (28) miteinander verbindbar sind, wobei die Wellenenden (12,14) mit senkrecht zu ihren Drehachsen (16,22) verlaufenden nutförmigen Aufnahmen (20,26) versehen sind, in die Aufnahmen (20,26) jeweils ein Kupplungsteil (30,32) des Kupplungselementes (28) eingreift und die Kupplungsteile (30,32) miteinander verbunden sind, **dadurch gekennzeichnet, daß** wenigstens eines der Kupplungsteile (30,32) des Kupplungselements in Richtung der Drehachsen (16,22) der Wellenenden (12,24) verschieblich gelagert ist.

2. Kupplungseinrichtung nach Anspruch 1, **dadurch gekennzeichnet, daß** wenigstens eines der Kupplungsteile (30,32) des Kupplungselementes (28) um seine Längsachse (38,40) schwenk- beziehungsweise drehbeweglich gelagert ist.

3. Kupplungseinrichtung nach Anspruch 2, **dadurch gekennzeichnet, daß** wenigstens eines der Kupplungsteile (30,32) in Richtung seiner Längsachse (38,40) verschieblich gelagert ist.

4. Kupplungseinrichtung nach einem der vorhergehenden Ansprüche, **dadurch gekennzeichnet, daß** die Kupplungsteile (30,32) im wesentlichen parallel zueinander angeordnet sind.

5. Kupplungseinrichtung nach einem der vorhergehenden Ansprüche, **dadurch gekennzeichnet, daß** die Kupplungsteile (30,32) durch wenigstens ein Verbindungselement (36) miteinander formschlüssig verbunden sind.

6. Kupplungseinrichtung nach einem der vorhergehenden Ansprüche, **dadurch gekennzeichnet, daß** das Kupplungselement (28,48) einstückig ausgebildet ist, und die Kupplungsteile (30,32) durch ein gemeinsames Mittelstück (50) miteinander verbunden sind.

7. Kupplungseinrichtung nach Anspruch 6, **dadurch gekennzeichnet, daß** das Mittelstück (50) nach innen gewölbt beziehungsweise tailliert ausgebildet ist.

8. Kupplungseinrichtung nach einem der Ansprüche 5 bis 7, **dadurch gekennzeichnet, daß** das wenigstens eine Verbindungselement (36) oder das Mittelstück (50) eine definierte Elastizität besitzt.

9. Kupplungseinrichtung nach einem der vorhergehenden Ansprüche, **dadurch gekennzeichnet, daß** wenigstens eine der Aufnahmen (20,26) im Querschnitt betrachtet rechteckig ist.

10. Kupplungseinrichtung nach einem der vorhergehenden Ansprüche, **dadurch gekennzeichnet, daß** die Kupplungsteile im wesentlichen rund ausgebildet sind und daß eine Höhe (h) der Aufnahmen (20,26) einem Durchmesser (d) der Kupplungsteile (30,32) entspricht.

11. Kupplungseinrichtung nach Anspruch 10, **dadurch gekennzeichnet, daß** eine Tiefe (t) der Aufnahmen (20,26) größer als der Durchmesser (d) ist.

12. Kupplungseinrichtung nach einem der Ansprüche 10 oder 11, **dadurch gekennzeichnet, daß** eine Länge (l) wenigstens eines der Kupplungsteile (30,32) größer ist als ein Durchmesser (D) der Wellenenden (12,14).

13. Kupplungseinrichtung nach einem der Ansprüche 10 bis 12, **dadurch gekennzeichnet, daß** wenigstens eine der Aufnahmen (20,26) im Querschnitt betrachtet rund ist, wobei ein Durchmesser (d₁) der Aufnahme (20,26) dem Durchmesser (d) des Kupplungsteils (30,32) entspricht.

14. Kupplungseinrichtung nach einem der Ansprüche 10 bis 13, **dadurch gekennzeichnet, daß** eine axiale Erstreckung (a) des Kupplungselementes (28,48) zirka 130 bis 400 % des Durchmessers (d) der Kupplungsteile (30,32) beträgt.

15. Kupplungseinrichtung nach Anspruch 12, **dadurch gekennzeichnet, daß** die Länge (l) zirka 200 bis 1000 % des Durchmessers (d) beträgt.

16. Kupplungseinrichtung nach einem der vorhergehenden Ansprüche, **dadurch gekennzeichnet, daß** wenigstens einem der Kupplungsteile (30,32) des Kupplungselementes (28,48) eine Verliersicherung zugeordnet ist.

17. Kupplungseinrichtung nach Anspruch 16, **dadurch gekennzeichnet, daß** die Verliersicherung von durch Verstemmen der Aufnahmen (20,26) erzeugten Laschen (52) gebildet wird.

18. Kupplungseinrichtung nach einem der Ansprüche 16 oder 17, **dadurch gekennzeichnet, daß** die Verliersicherung durch zusätzliche Elemente, wie Ringelemente (60), Sicherungsringe (64), Sicherungsbleche (66), Paßstücke (70), Sicherungsstifte (74), Sicherungsdrähte (84), Sicherungsschrauben (102), federbelastetes Halteteile (108), Sprengringe (118) oder Splinte (120) gebildet ist.

19. Kupplungseinrichtung nach einem der vorhergehenden Ansprüche, **dadurch gekennzeichnet, daß** wenigstens eines der Kupplungsteile (30,32) als Hohlkörper (122) ausgebildet ist, der von einer mittels Sicherungselemente (126) fixierbaren Welle (124) gesichert ist.

## Claims

1. A coupling device with two rotatable shaft ends (12, 14) connectable together for transmitting a torque via a coupling element (28), whereby the shaft ends (12, 14) are provided with groove-like locations (20, 26) extending at right angles to their axes of rotation (16, 22), the coupling parts (30, 32) of the coupling element (28) engaging in the respective groove-like locations (20, 26) and the coupling parts (30, 32) being joined together, **characterised in that** at least one of the coupling parts (30, 32) of the coupling element is located slidably in the direction of the axes of rotation (16, 22) of the shaft ends (12, 24).

2. A coupling device according to claim 1, **characterised in that** at least one of the coupling parts (30, 32) of the coupling element (28) is located tiltably and, as the case may be, rotatably around its longitudinal axis (38, 40).

3. A coupling device according to claim 2, **characterised in that** at least one of the coupling parts (30, 32) is located slidably in the direction of its longitudinal axis (38, 40).

4. A coupling device according to one of the preceding claims, **characterised in that** the coupling parts (30, 32) are arranged essentially parallel to each other.

5. A coupling device according to one of the preceding claims, **characterised in that** the coupling parts (30, 32) are positively interlinked by at least one connecting element (36).

6. A coupling device according to one of the preceding claims, **characterised in that** the coupling element (28, 48) is designed in one piece and the coupling pieces (30, 32) are interconnected by a common centre piece (50).

7. A coupling device according to claim 6, **characterised in that** the centre piece (50) is domed to the inside or waisted.

8. A coupling device according to one of the claims 5 to 7, **characterised in that** at least one connecting element (36) or the centre piece (50) has a specific flexibility.

9. A coupling device according to one of the preceding claims, **characterised in that** at least one of the locations (20, 26) has a square cross-section.

10. A coupling device according to one of the preceding claims, **characterised in that** the coupling parts are essentially round and that the height (h) of the locations (20, 26) is equal to the diameter (d) of the coupling parts (30, 32).

11. A coupling device according to claim 10, **characterised in that** a depth (t) of the locations (20, 26) is larger than the diameter (d).

12. A coupling device according to one of the claims 10 or 11, **characterised in that** a length (1) of at least one of the coupling parts (30, 32) is larger than a diameter (D) of the shaft ends (12, 14).

13. A coupling device according to one of the claims 10 to 12, **characterised in that** at least one of the locations (20, 26) has a round cross-section, whereby a diameter (d₁) of the location (20, 26) is equal to the diameter (d) of the coupling part (30, 32).

14. A coupling device according to one of the claims 10 to 13, **characterised in that** an axial extension (a) of the coupling element (28, 48) extends axially to approx. between 130 and 400% of the diameter (d) of the coupling parts (30, 32).

15. A coupling device according to claims 12, **characterised in that** the length (1) is approximately between 200 and 1000% of the diameter (d).

16. A coupling device according to one of the preceding claims, **characterised in that** a captive safety lock is associated with at least one of the coupling parts (30, 32) of the coupling element (28, 48).

17. A coupling device according to claim 16, **characterised in that** the captive safety lock is formed by the link plates (52) produced by caulking the locations (20, 26).

18. A coupling device according to one of the claims 16 or 17, **characterised in that** the captive safety lock is formed by additional elements such as ring elements (60), locking rings (64), locking plates (66), fitting pieces (70), dowels (74), locking wires (84), locking bolts (102), spring-loaded holding pieces (108), spring washers (118) or split pins (120).

19. A coupling device according to one of the preceding claims, **characterised in that** at least one of the coupling parts (30, 32) is designed as a hollow body (122) secured by a shaft (124) located by means of the locking elements (126).

## Revendications

1. Dispositif d'accouplement avec deux extrémités d'arbres mobiles en rotation (12, 14) qui sont raccordables l'un à l'autre pour la transmission d'un couple de rotation par l'intermédiaire d'un élément d'accouplement (28), moyennant quoi les extrémités d'arbres (12, 14) sont munies de logements (20, 26) en forme de rainures s'étendant perpendiculairement à leurs axes de rotation (16, 22), une pièce d'accouplement (30, 32) de l'élément d'accouplement (28) s'engrène respectivement dans les logements (20, 26) et les pièces d'accouplement (30, 32) sont raccordées l'une à l'autre, **caractérisé en ce qu'**au moins l'une des pièces d'accouplement (30, 32) de l'élément d'accouplement est logée de manière déplaçable dans la direction des axes de rotation (16, 22) des extrémité d'arbres (12, 24).

2. Dispositif d'accouplement selon la revendication 1, **caractérisé en ce qu'**au moins l'une des pièces d'accouplement (30, 32) de l'élément d'accouplement (28) est logée de manière mobile en pivotement ou en rotation autour de son axe longitudinal (38, 40).

3. Dispositif d'accouplement selon la revendication 2, **caractérisé en ce qu'**au moins l'une des pièces d'accouplement (30, 32) est logée de manière déplaçable dans la direction de son axe longitudinal (38, 40).

4. Dispositif d'accouplement selon l'une quelconque des revendications précédentes, **caractérisé en ce que** les pièces d'accouplement (30, 32) sont disposées sensiblement parallèlement l'une à l'autre.

5. Dispositif d'accouplement selon l'une quelconque des revendications précédentes, **caractérisé en ce que** les pièces d'accouplement (30, 32) sont raccordées l'une à l'autre par engagement positif à l'aide d'au moins un élément de raccordement (36).

6. Dispositif d'accouplement selon l'une quelconque des revendications précédentes, **caractérisé en ce que** l'élément d'accouplement (28, 48) est réalisé en une seule pièce et les pièces d'accouplement (30, 32) sont raccordées l'une à l'autre par une pièce centrale commune (50).

7. Dispositif d'accouplement selon la revendication 6, **caractérisé en ce que** la pièce centrale (50) est bombée ou cintrée vers l'intérieur.

8. Dispositif d'accouplement selon l'une quelconque des revendications 5 à 7, **caractérisé en ce qu'**au moins l'un des éléments de raccordement (36) ou la pièce centrale (50) présente une élasticité définie.

9. Dispositif d'accouplement selon l'une quelconque des revendications précédentes, **caractérisé en ce qu'**au moins l'un des logements (20, 26) est rectangulaire vu en coupe transversale.

10. Dispositif d'accouplement selon l'une quelconque des revendications précédentes, **caractérisé en ce que** les pièces d'accouplement sont réalisées sensiblement rondes et **en ce que** une hauteur (h) des logements (20, 26) correspond à un diamètre (d) des pièces d'accouplement (30, 32).

11. Dispositif d'accouplement selon la revendication 10, **caractérisé en ce qu'**une profondeur (t) des logements (20, 26) est supérieure au diamètre (d).

12. Dispositif d'accouplement selon l'une quelconque des revendications 10 ou 11, **caractérisé en ce qu'**une longueur (I) d'au moins l'une des pièces d'accouplement (30, 32) est supérieure à un diamètre (D) des extrémités d'arbres (12, 14).

13. Dispositif d'accouplement selon l'une quelconque des revendications 10 à 12, **caractérisé en ce qu'**au moins l'un des logements (20, 26) est rond vu en coupe transversale, un diamètre (d₁) des logements (20, 26) correspondant au diamètre (d) de la pièce d'accouplement (30, 32).

14. Dispositif d'accouplement selon l'une quelconque des revendications 10 à 13, **caractérisé en ce qu'**une projection axiale (a) de l'élément d'accouplement (28, 48) représente environ 130% à 400% du diamètre (d) des pièces d'accouplement (30, 32).

15. Dispositif d'accouplement selon la revendication 12, **caractérisé en ce que** la longueur (1) représente environ 200% à 1000% du diamètre (d).

16. Dispositif d'accouplement selon l'une quelconque des revendications précédentes, **caractérisé en ce qu'**un dispositif de sécurité anti-perte est associé à au moins l'une des pièces d'accouplement (30, 32) de l'élément d'accouplement (28, 48).

17. Dispositif d'accouplement selon la revendication 16, **caractérisé en ce que** le dispositif de sécurité anti-perte est constitué par des colliers de fixation (52) formés par le matage des logements (20, 26).

18. Dispositif d'accouplement selon l'une quelconque des revendications 16 ou 17, **caractérisé en ce que** le dispositif de sécurité anti-perte est constitué par des éléments supplémentaires tels que des éléments annulaires (60), des circlips 64), des plaques d'arrêt (66), des raccords (70), des goupilles de sécurité (74), des fils de sécurité (84), des vis de retenus (102), des pièces de retenue chargées par ressort (108), des bagues de butée (118) ou des goupilles fendus (120).

19. Dispositif d'accouplement selon l'une quelconque des revendications précédentes, **caractérisé en ce qu'**au moins l'une des pièces d'accouplement (30, 32) est conçue comme un corps creux (122) qui est bloqué par un arbre (124) fixable à l'aide d'éléments de sécurité (126).
